# FASCICULE DE BREVET EUROPEEN

(11) **EP 2 604 907 B1**
(45) Date de publication et mention de la délivrance du brevet: **13.08.2014**
(21) Numéro de dépôt: 12194290.8
(22) Date de dépôt: 26.11.2012
(51) Int. Cl.: F16M 13/00, F16M 13/02

(54) **Dispositif support pour un appareil électrique rechargeable**
Haltevorrichtung für ein wiederaufladbares elektrisches Gerät
Support device for a rechargeable electrical appliance

(30) Priorité: 14.12.2011 FR 1161625
(43) Date de publication de la demande: 19.06.2013
(73) Titulaire: Avenir Plastic Cards, 35220 Châteaubourg (FR)
(72) Inventeur: Gautier, Joël, 35220 CHATEAUBOURG (FR)
(74) Mandataire: Oger, Cyril Pierre

(56) Documents cités:
- DE-U1-202009 000 066
- US-A- 4 940 204
- US-A1- 2011 260 014
- ASHLEY: "Holder for Charging Cell Phone (made from lotion bottle)", www.makeit-loveit.com, 1 décembre 2011 (2011-12-01), pages 1-1, XP002679804, Extrait de l'Internet: URL:http://www.makeit-loveit.com/2011/12/h older-for-charging-cell-phone-made-from-lo tion-bottle.html [extrait le 2012-07-11]

## Description

### 1. Domaine technique de l'invention

Le domaine de l'invention est celui des appareils électriques rechargeables.

Plus précisément, la présente invention concerne un dispositif support pour un appareil électrique rechargeable, notamment, mais non exclusivement, pour un téléphone portable.

### 2. Arrière-plan technologique

Les appareils électriques rechargeables, tels que les téléphones portables par exemple, possèdent une batterie comme source de courant qui doit être rechargée quand elle est vide ou faible.

Pour ce faire, on utilise classiquement un chargeur de batterie se présentant sous la forme d'un long cordon électrique qui est pourvu, à une première extrémité, d'un bloc prise comprenant une fiche électrique et un convertisseur de tension alternative-continue et, à une deuxième extrémité, d'un connecteur pour amener la tension continue au téléphone portable.

L'utilisateur, lorsqu'il souhaite recharger la batterie de son téléphone, relie le téléphone au connecteur du chargeur et introduit la fiche du bloc prise du chargeur dans une prise électrique murale.

Lorsque que la prise électrique murale se situe à proximité du sol, l'utilisateur pose généralement le téléphone sur le sol et laisse trainer le cordon du chargeur, provoquant ainsi un certain désordre et une gêne.

En outre, il existe un risque qu'une personne se prenne les pieds dans le cordon du chargeur et chute et/ou endommage le téléphone.

Pour pallier cet inconvénient, il a été proposé des supports de rechargement.

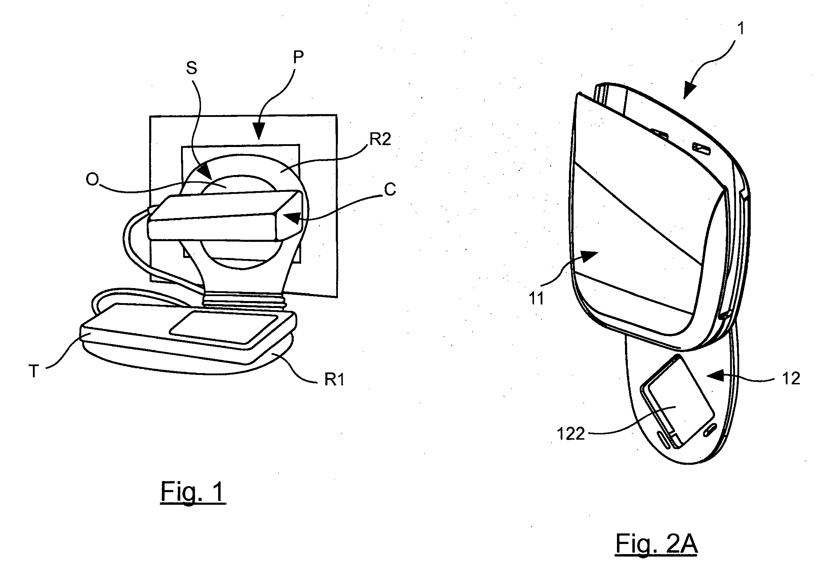

Un exemple d'un tel support S est illustré sur la figure 1. Il comprend deux parties perpendiculaires, à savoir un élément de réception R1 d'un téléphone portable T et une patte R2. Le chargeur C du téléphone portable T assure le maintien en position du support S sur une prise murale P, lorsqu'il coopère avec une ouverture O ménagée sur la patte R2. Ce type de support est toutefois relativement instable lors de son utilisation et encombrant lorsqu'il n'est pas utilisé.

Par ailleurs, sa mise en oeuvre nécessite qu'un espace soit disponible sous la prise murale P afin de pouvoir y placer l'élément de réception R1. Or, dans certains cas, un tel espace n'est pas disponible, une plinthe par exemple pouvant faire obstacle au positionnement stable de l'élément de réception R1.

Dans certains cas, l'utilisateur peut souhaiter recharger son téléphone sans utiliser un tel support et pose alors le téléphone à plat sur un meuble, tel un bureau, ce qui ne permet pas à l'utilisateur de visualiser aisément les informations s'affichant sur l'écran du téléphone.

### 3. Objectifs de l'invention

L'invention vise à pallier au moins certains des inconvénients des supports de rechargement connus.

En particulier, l'invention vise aussi à fournir, dans au moins un mode de réalisation de l'invention, un dispositif support qui permette de limiter au maximum la gêne et les risques lors du rechargement d'un appareil électrique rechargeable.

Un autre objectif d'au moins un mode de réalisation de l'invention est de fournir un dispositif support d'un appareil électrique rechargeable qui soit compact, aussi bien lors de son utilisation que lors de son stockage et qui soit simple à mettre en oeuvre.

L'invention, dans au moins un mode de réalisation, a encore pour objectif de fournir un dispositif support d'un appareil électrique rechargeable qui soit stable et qui puisse être utilisé quelle que soit la configuration et/ou l'orientation de la prise électrique à partir de laquelle l'utilisateur souhaite recharger l'appareil électrique.

Encore un autre objectif de l'invention, dans au moins un mode de réalisation, est de fournir un dispositif qui permette de ranger un appareil électrique rechargeable.

### 4. Exposé de l'invention

Ces objectifs, ainsi que d'autres qui apparaîtront par la suite, sont atteints par un dispositif support pour au moins un appareil électrique rechargeable comprenant au moins un réceptacle dudit appareil et un bras de maintien assemblé de façon amovible audit réceptacle, ledit bras de maintien comprenant au moins une ouverture à travers laquelle une fiche électrique d'un chargeur dudit appareil électrique est apte à passer de façon à maintenir ledit dispositif support sur une prise électrique.

Selon l'invention, un tel dispositif comprend des premier et deuxième moyens d'assemblage réversible qui définissent deux axes perpendiculaires d'assemblage du bras de maintien sur ledit réceptacle.

Ainsi, il est proposé un dispositif support d'un appareil électrique rechargeable, tel un téléphone portable, qui comprend deux éléments distincts, à savoir un premier élément sous la forme d'un réceptacle et un deuxième élément sous la forme d'un bras de maintien.

Le réceptacle comprend un espace de réception pour un téléphone portable par exemple. Le bras de maintien est pourvu d'une ouverture destinée à être traversée par la fiche électrique du chargeur du téléphone afin de fixer le dispositif support sur une prise électrique (murale par exemple).

Le bras de maintien, qui est monté de façon réversible sur le réceptacle, peut être orienté selon trois, voire quatre directions, par rapport au réceptacle du téléphone.

Pour ce faire, il est prévu des premiers et deuxièmes moyens d'assemblage réversible qui définissent deux axes perpendiculaires d'assemblage du bras de maintien sur le réceptacle.

Le dispositif support du téléphone peut ainsi être fixé selon trois, voire quatre, positions distinctes autour d'une prise électrique. En d'autres termes, il est possible de fixer le dispositif support sur n'importe quel côté d'une prise électrique (à gauche, à droite, au-dessus ou en dessous). Ces positions sont espacées entre elles d'un angle de 90°.

Ces moyens d'assemblage réversible permettent en outre une séparation aisée du bras de maintien et du réceptacle pour stocker le dispositif support ou pour modifier la position du bras de maintien par rapport au réceptacle.

Un utilisateur souhaitant recharger un téléphone portable peut ainsi le placer dans le réceptacle du dispositif support et adapter le bras de maintien du dispositif support pour pouvoir fixer ce dernier par le biais du chargeur du téléphone sur une prise électrique, quelle que soit la disposition de cette prise (en bas d'un mur, à mi-hauteur, dans un angle, à proximité d'un interrupteur).

Le réceptacle est configuré pour maintenir le téléphone et le câble du chargeur en position rangée tout en les connectant à la prise électrique (le cordon du chargeur et le téléphone ne traînent donc pas sur le sol ce qui minimise la gêne et les risques).

Avantageusement, le dispositif comprend des troisièmes moyens d'assemblage réversible qui définissent un troisième axe d'assemblage du bras de maintien sur ledit réceptacle.

Le dispositif support est également apte à maintenir le téléphone portable sur un support plan, par exemple un bureau. Pour ce faire, le bras de maintien est assemblé au réceptacle selon un troisième axe d'assemblage.

Dans cette configuration, le bras de maintien et le réceptacle du téléphone constituent des surfaces d'appui du dispositif support sur la surface plane et permettent de placer le téléphone en position verticale ou inclinée. Dans cette configuration, la batterie du téléphone portable situé dans le réceptacle peut éventuellement être rechargée par le biais d'un chargeur.

En d'autres termes, le dispositif support de l'invention permet de recevoir un téléphone portable (ou tout autre appreil électrique rechargeable) et de charger la batterie de ce dernier tandis que le dispositif support (et donc le téléphone) est fixé sur une prise électrique ou bien placé sur un bureau.

Le dispositif support de l'invention permet en outre de ranger un téléphone portbale (ou tout autre appreil électrique rechargeable) sans que ce dernier soit forcément en cours de rechargement.

Préférentiellement, chacun desdits moyens d'assemblage réversible est configuré de façon à ce que ledit bras de maintien est monté mobile en rotation sur ledit réceptacle.

Le passage du bras de maintien d'une position à une autre par rapport au réceptacle (de gauche à droite, ou de haut en bas) est, par conséquent, relativement aisé, puisque l'utilisateur peut faire pivoter le bras de maintien sans le séparer du réceptacle.

Dans un mode de réalisation particulier de l'invention, chacun desdits moyens d'assemblage réversible se présente sous la forme de moyens de clipsage.

Préférentiellement, chacun desdits moyens de clipsage comprend au moins deux griffes portées par ledit réceptacle et aptes à coopérer avec au moins un axe de clipsage dudit bras de maintien.

De cette façon, l'assemblage et la séparation du bras de maintien au réceptacle sont facilités.

En outre, ce système est simple à mettre en oeuvre.

Par ailleurs, la stabilité du dispositif support est optimisée.

Selon une autre caractéristique, lesdits troisièmes moyens d'assemblage réversible comprennent des moyens de blocage en rotation du bras de maintien par rapport audit réceptacle.

Ces moyens de blocage constituent une butée qui limite la rotation du bras de maintien par rapport au réceptacle lorsque le support est disposé sur une surface plane. Ces moyens de blocage sont configurés de façon à ce que l'angle entre le bras de maintien et le réceptacle, et donc l'angle d'inclinaison du réceptacle et du téléphone, permette une lecture facile des informations affichées sur l'écran du téléphone.

Selon une mise en oeuvre particulière de l'invention, ladite ouverture est de forme carrée.

L'ouverture ménagée dans le bras de maintien permet l'insertion de la fiche électrique d'un chargeur dans au moins deux directions sensiblement perpendiculaires.

Selon une mise en oeuvre particulière de l'invention, ledit réceptacle porte au moins une patte de stabilisation dudit dispositif support sur une surface plane.

Ce ou ces pattes de stabilisation portées par le réceptacle, aident au maintien en position verticale ou inclinée du dispositif de support, et donc du téléphone, sur une surface plane.

Avantageusement, ledit réceptacle comprend une façade avant solidairisée à une plaque arrière de sorte à définir un espace de réception dudit appareil électrique.

L'espace défini entre la façade avant et la plaque arrière permet une insertion (et un retrait) aisée de l'appareil électrique dans le réceptacle tout en assurant un maintien suffisant de l'appareil.

Dans un mode de réalisation particulier de l'invention, la façade avant est solidarisée à la plaque arrière par des moyens de liaison qui s'étendent sur une zone réduite du bord du réceptacle.

Le réceptacle est ainsi ouvert sur une majeure partie de son pourtour et permet de faire passer aisément le câble du chargeur du téléphone situé dans le réceptacle vers la prise électrique. Le réceptacle du support de l'invention est ainsi apte à recevoir tous types d'appareils électriques rechargeables, avec des connectiques de rechargement différentes (sur un côté de l'appareil, ou bien sur la face inférieure ou supérieure de l'appareil).

Selon une mise en oeuvre particulière de l'invention, lesdits moyens de liaison sont ajustables de façon à pouvoir régler l'écartement entre la façade avant et la plaque arrière.

Cette liaison ajustable permet de régler l'espacement des façades avant et arrière du réceptacle du dispositif support, et d'adapter le dispositif support à des appareils électriques rechargeables d'épaisseur variable.

Avantageusement, la façade avant est au moins en partie transparente.

La visualisation des données affichées sur l'écran du téléphone portable lorsque celui-ci est placé dans le réceptacle est donc facilitée et ne nécessite pas de retirer le téléphone du réceptacle.

Dans un mode de réalisation particulier, au moins un bord intérieur de ladite ouverture comprend au moins un bossage.

Ce ou ces bossages ont pour objectif de minimiser le jeu entre le bras de maintien et la fiche électrique du chargeur lorsque cette dernière est insérée dans l'ouverture du bras de maintien, et donc d'optimiser la stabilité du dispositif support lorsque celui-ci est fixé sur une prise électrique.

Dans un mode de réalisation particulier, ledit bras de maintien comprend sur au moins une de ses faces une surépaisseur ou un bourrelet autour de l'ouverture.

Cette surépaisseur permet d'augmenter la surface de contact entre le bras de maintien et la fiche électrique du chargeur lorsque cette dernière est insérée dans l'ouverture du bras de maintien, et donc de minimiser le jeu entre ces deux éléments. Par conséquent, la stabilité du dispositif support lorsque celui-ci est fixé sur une prise électrique est optimisée.

### 5. Liste des figures

D'autres buts, caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue en perspective d'un dispositif support pour un appareil électrique rechargeable selon l'art antérieur ;
- les figures 2A, 2B et 2C sont respectivement une vue en perspective, une vue éclatée et une vue de dessus d'un dispositif support d'un appareil électrique rechargeable selon un mode de réalisation de l'invention ;
- la figure 3A est une vue de la face arrière du réceptacle du dispositif support de la figure 2A ;
- les figures 3B et 3C sont des vues de chaque face du bras de maintien du dispositif support de la figure 2A ;
- la figure 3D est une vue de détail du bras de maintien de la figure 3C ;
- les figures 4A à 4C illustrent des possibilités d'assemblage et d'orientation du bras de maintien sur le réceptacle ;
- la figure 4D est une vue de détail de la figure 4C ;
- les figures 5A et 5B illustrent une autre possibilité d'assemblage du bras de maintien sur le réceptacle.

### 6. Description détaillée d'un mode de réalisation de l'invention

La figure 2A est une vue en perspective du dispositif support 1 pour un appareil électrique rechargeable selon l'invention.

Le dispositif support 1 comprend un réceptacle 11 pour un appareil électrique rechargeable et un bras de maintien (ou embase ou languette) 12. Le réceptacle 11 et le bras de maintien 12 sont, par exemple, fabriqués en matière plastique (en polycarbonate), par exemple, ou tout autre matériau adapté.

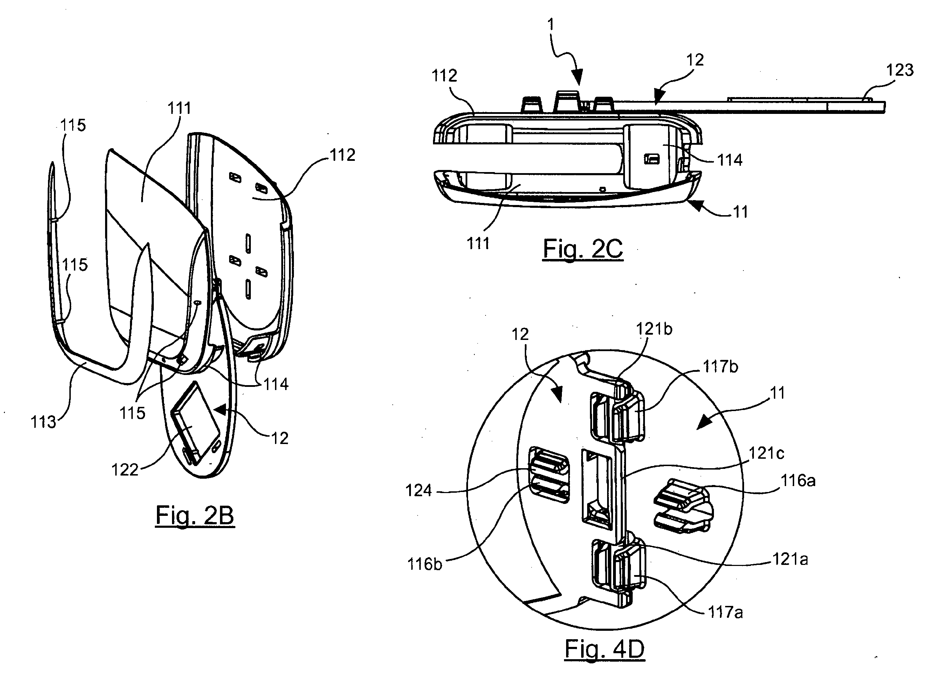

Comme illustré sur la figure 2B, qui est une vue éclatée du dispositif support 1 de la figure 2A, le réceptacle 11 comprend une plaque arrière, ou plaque de fond, 112 opaque, une façade avant 111 transparente et un enjoliveur 113.

L'enjoliveur 113 est assemblé sur la façade avant 111 par le biais d'éléments de clipsage 115. Dans l'exemple illustré, la façade avant 111 et la plaque arrière 112 portent chacune un élément de liaison 114. La solidarisation de la façade avant 111 et de la plaque arrière 112 est mise en oeuvre en soudant par ultrason ces éléments de liaison 114.

L'espace entre la façade avant 111 et la la plaque arrière 112 est dimensionné de façon à recevoir et supporter un appareil électrique rechargeable qui est, à titre d'exemple par la suite, un téléphone portable (non représenté).

On note que les éléments de liaison 114 s'étendent sur une zone de largeur relativement faible entre la façade avant 111 et la plaque arrière 112, comme illustrée sur la figure 2C. Ceci permet de disposer d'une ouverture entre la façade avant 111 et la plaque arrière 112 sur une majeure partie du pourtour du réceptacle 11. Le passage de câble est par conséquent facilité, et le réceptacle 11 est adapté pour recevoir des appareils électriques avec des connectiques de rechargement différentes (c'est-à dire des appareils avec un port de rechargement situé sur un côté, ou une face inférieure ou supérieure de l'appareil).

Dans une variante, la façade avant 111 est assemblée à la plaque arrière 112 par des moyens de clipsage.

Dans une autre variante, l'assemblage de la façade avant 111 et de la plaque arrière 112 est mis en oeuvre par le biais de moyens de liaison ajustables ou réglables, tels des éléments crantés, qui permettent un réglage de l'écartement entre les deux façades avant 111 et la plaque arrière 112. Dans ce cas, le réceptacle 11 peut être adapté par l'utilisateur pour recevoir des appareils électriques d'épaisseur différente.

L'espace entre la façade avant 111 et la plaque arrière 112 peut être réduit en prévoyant des prolongements sur les côtés de ces deux parties. Ces prolongements étant par exemple disposés en quinconce, ils permettent le passage du cordon de connection du chargeur et retiennent de manière sécurisée le téléphone placé dans le réceptacle lorsque l'épaisseur du téléphone est inférieure à celle du cordon de connection.

Le bras de maintien 12 est monté de manière amovible ou réversible sur le réceptacle 11.

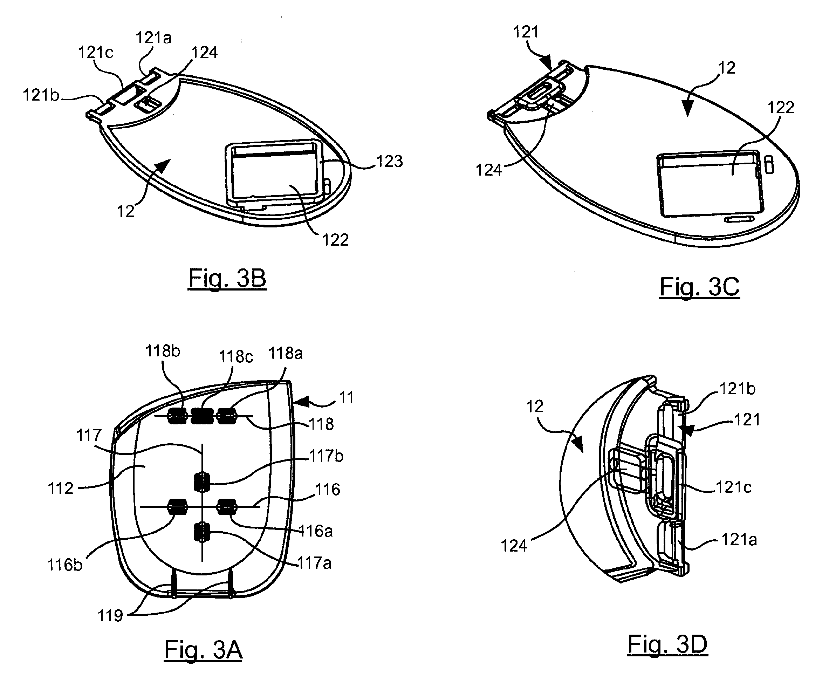

Plus précisément, comme illustré sur la figure 3A, plusieurs griffes de clipsage sont portées par la face extérieure de la plaque arrière 112 et définissent trois axes d'assemblage du bras de maintien 12 sur le réceptacle 11, à savoir :
- un premier axe d'assemblage 116 défini par les griffes 116a et 116b, qui s'étend horizontalement ;
- un deuxième axe d'assemblage 117 défini par les griffes 117a et 117b, qui s'étend verticalement et perpendiculairement au premier axe d'assemblage 116 ; et
- un troisième axe d'assemblage 118 défini par les griffes 118a, 118b et 118c, qui s'étend horizontalement, de façon sensiblement parallèle au premier axe d'assemblage 116.

Chacune des griffes 116a, 116b, 117a, 117b, 118a, 118b et 118c comprend deux éléments dont l'espacement et la flexibilité sont choisis de façon à permettre l'insertion à force et le maintien de l'axe de clipsage 121 du bras de maintien 12 (visible sur les figures 3B et 3C) dans les griffes de clipsage, ainsi que le retrait de l'axe de clipsage 121 hors des griffes lorsque l'utilisateur tire suffisamment fort sur le bras de maintien 12.

L'axe de clipsage 121 présente dans cet exemple une forme cylindrique constituée de trois zones 121a, 121b, 121c (figure 3B) aptes chacune à coopérer avec une griffe de clipsage du réceptacle 11.

Lorsque le bras de maintien 12 est assemblé au réceptacle 11 selon l'un des premier et deuxième axes d'assemblage 116, 117, le dispositif support 1 peut être fixé sur une prise électrique murale de façon à recharger le téléphone portable logé dans le réceptacle 11.

Le bras de maintien 12 comprend une ouverture 122 de forme carrée qui permet le passage des broches de contact du bloc prise d'un chargeur de batterie. Une fois ces broches de contact introduites dans une prise électrique, le bloc prise du chargeur maintient le dispositif support 1 sur la prise électrique. En d'autres termes, le support 1 est suspendu au bloc prise. Si l'autre extrémité du chargeur est reliée au téléphone logé dans le réceptacle, le téléphone peut ainsi être rechargé.

Selon l'invention, l'assemblage du bras de maintien 12 sur le réceptacle 11 selon l'un des premier et deuxième axes d'assemblage 116, 117, permet de maintenir le dispositif support 1 sur n'importe quel côté d'une prise électrique.

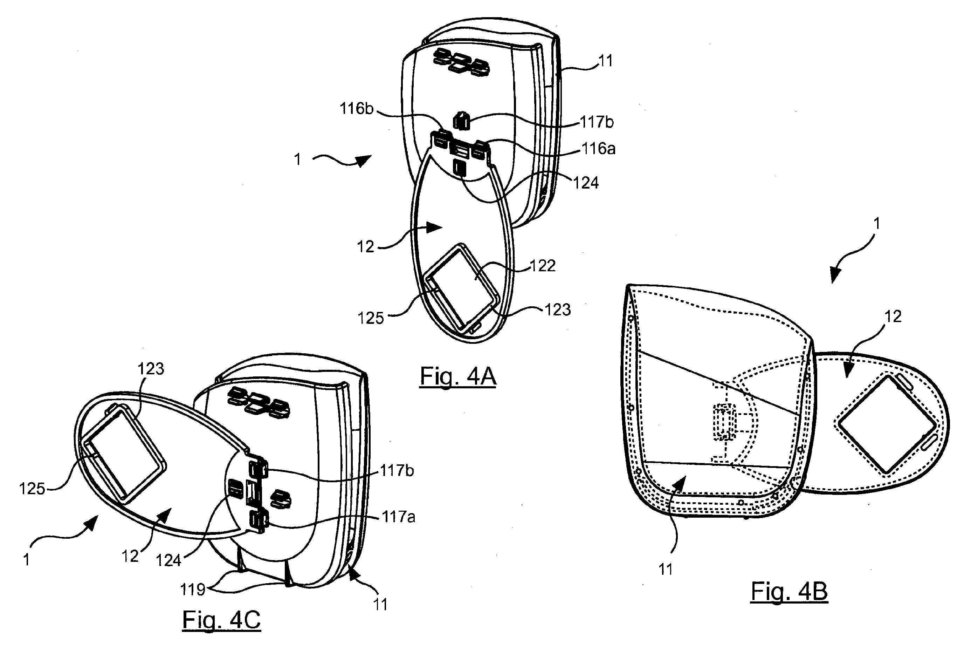

Ainsi, si un utilisateur désire placer le dispositif support 1 au-dessus ou au-dessous d'une prise murale, il insère l'axe de clipsage 121 du bras de maintien 12 dans les griffes de clipsage 116a et 116b. Cette première position du bras de maintien 12 par rapport au réceptacle 11 est illustrée sur la figure 4A.

Si un utilisateur désire placer le dispositif support 1 à droite ou à gauche d'une prise murale, il insère l'axe de clipsage 121 du bras de maintien 12 dans les griffes de clipsage 117a et 117b. La position à droite du bras de maintien 12 par rapport au réceptacle 11 est illustrée sur les figures 4C et 4D.

Il est à noter que, dans ce mode de réalisation, une fois inséré dans les griffes de clipsage 116a et 116b, ou 117a et 117b, le bras de maintien 12 peut pivoter de 180° d'une position à l'autre (il est donc monté mobile en rotation sur le réceptacle 11 autour de chacun des axes d'assemblage 116 et 117). A titre d'exemple, en supposant que le dispositif support soit situé à droite d'une prise électrique, l'utilisateur peut faire pivoter le bras de maintien 12 autour de l'axe 117 (sans retirer l'axe 121 du bras de maintien 12 des griffes 117a et 117b), lorsqu'il souhaite placer le dispositif support à gauche de la prise électrique.

Toutefois, dans l'exemple illustré, le bras de maintien 12 porte un élément de verrouillage sous la forme d'un axe 124 qui est formé en ménageant deux ouvertures rectilignes parallèles dans le bras de maintien 12. L'axe de verrouillage 124 s'étend perpendiculairement à l'axe de clipsage 121, constitué des trois zones 121a, 121b, 121c, comme illustré sur la vue de détail de la figure 3D.

Lorsque le bras de maintien 12 est dans la position illustrée sur la figure 4A par exemple, l'axe 124 coopère avec la griffe de clipsage 117a et verrouille le bras de maintien 12 en position, évitant ainsi toute rotation intempestive du bras de maintien 12 autour de l'axe 116. Un tel verrouillage peut également être mis en oeuvre lorsque le bras de maintien 12 est dans l'une ou l'autre des positions illustrées sur les figures 4B et 4C.

La figure 4D est une vue de détail de la figure 4C qui montre le verrouillage du bras 12 sur le réceptacle 11 par le biais de l'axe 124 qui coopère avec la griffe de clipsage 116b.

Une telle solution permet d'optimiser la stabilité du dispositif support 1 lorsqu'il est fixé sur une prise électrique et qu'il porte un appareil électrique en cours de rechargement.

Il est à noter que, dans une variante, le bras de maintien peut être placé dans quatre positions par rapport au réceptacle, à savoir à droite, à gauche, et en-dessous, mais également au dessus. Dans ce dernier cas, le bras de maintien 12 est dans une position symétrique à la position de la figure 4A par rapport à l'axe 116, la longueur du bras 12 étant choisie de façon à ce que l'ouverture 122 soit accessible.

Comme mentionné précédemment, l'utilisateur fait passer les broches de contact du bloc prise du chargeur de batterie (qu'il a préalablement relié au téléphone situé dans le réceptacle 11) dans l'ouverture 122 ménagée dans le bras de maintien 12, puis il introduit ces contacts dans une prise électrique. Le cordon du chargeur peut être placé dans l'espace situé entre la façade avant 111 et la plaque arrière 112 du réceptacle 11, et ne traîne donc pas sur le sol, limitant ainsi les risques qu'un utilisateur se prenne les pieds dans le cordon.

On note que la forme carrée de l'ouverture 122 permet le passage de la fiche électrique du chargeur suivant deux directions sensiblement perpendiculaires (illustrées sur les figures 4A et 4C notamment). Cette forme particulière est adaptée à la forme hexagonale standardisée des prises européennes.

Dans une variante, cette forme peut être adaptée à différents types de prises, telles que les prises américaines à trois broches par exemple.

Il est à noter que le bras de maintien 12 possède une surépaisseur de matière 123, au niveau du contour de son ouverture 122, ce qui permet d'augmenter la surface de contact entre la fiche électrique du chargeur et l'ouverture 122 du bras de maintien 12, et, par conséquent, de minimiser le jeu entre ces deux éléments (on optimise ainsi la stabilité).

Dans une mise en oeuvre particulière, on prévoit, sur au moins un côté de cette ouverture 122, un ou plusieurs bossages 125 qui permettent également de minimiser le jeu entre la fiche du chargeur et l'ouverture 122 du bras de maintien 12.

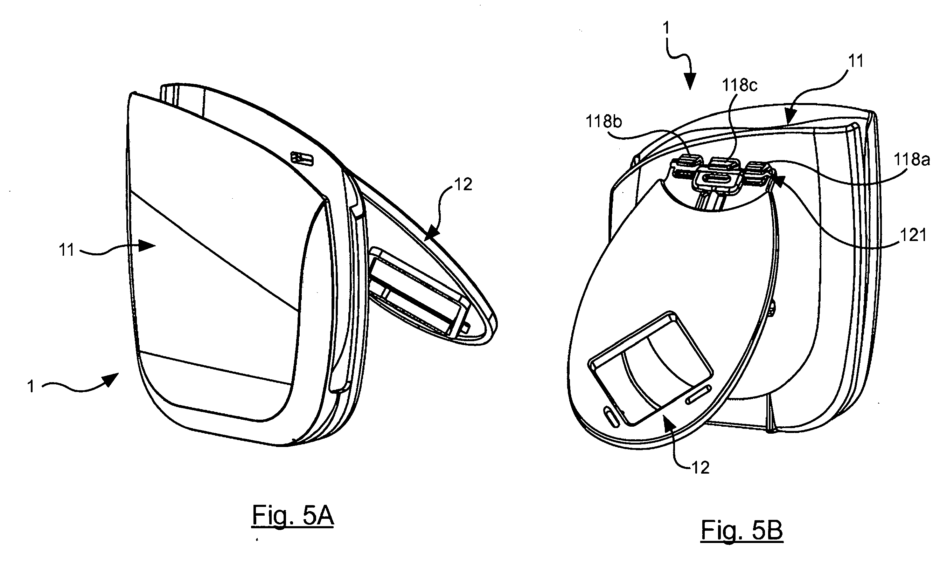

Il est possible d'utiliser le dispositif support 1 comme un socle de support et de rangement du téléphone sur une surface plane telle qu'une table ou un bureau comme illustré sur les figures 5A et 5B.

Pour ce faire, l'utilisateur doit insérer l'axe 121 du bras de maintien 12 dans les griffes 118a, 118b, 118c. En d'autres termes, le bras de maintien 12 est assemblé au dispositif support selon le troisième axe d'assemblage 118 et sert d'appui sur la surface plane.

Dans le mode de réalisation illustré, il est prévu des pattes de stabilisation 119 sur la partie inférieure de la plaque arrière 112 du réceptacle 11 qui permettent de stabiliser le dispositif support 1 lorsqu'il est placé sur une surface plane (en position « bureau » ou de rangement).

En outre, la griffe centrale 118c coopérant avec l'élément 121c du bras de maintien12, est configurée de telle sorte à bloquer dans la position illustrée le bras de maintien 12. En d'autres termes, la griffe centrale 118c impose un angle d'inclinaison maximal entre le réceptacle 11 et le bras de maintien 12.

Dans cette position, le téléphone (non représenté) qui est logé dans le réceptacle 11 du dispositif support 1 peut être relié par le biais d'un chargeur à une prise électrique.

Du fait que la façade avant 111 soit transparente, l'écran de visualisation du téléphone portable est aisément visible par l'utilisateur.

Le dispositif support de l'invention est donc soit un support de prise, soit un support de rangement. Il est particulièrement économique à fabriquer, simple à monter et relativement stable dans ces deux configurations. Il peut en outre être désassemblé et rangé de façon compacte.

Le dispositif support est bien évidemment adapté pour maintenir et recharger (ou ranger) d'autres appareils électriques rechargeables, tels que des objets électroniques portatifs comme les PDA (assistants de données personnels), les baladeurs audionumériques, les appareils photos numériques, les consoles portables de jeux vidéo, les dictaphones.

D'autres moyens d'assemblage réversible du bras de maintien 12 sur le réceptacle 11 peuvent être envisagés (assemblage du type tenon mortaise par exemple).

On peut prévoir un élément d'accrochage d'un accessoire (clés par exemple) sur le réceptacle et/ou le bras de maintien.

## Revendications

1. Dispositif support (1) pour au moins un appareil électrique rechargeable comprenant au moins un réceptacle (11) dudit appareil et un bras de maintien (12) assemblé de façon amovible audit réceptacle, ledit bras de maintien (12) comprenant au moins une ouverture (122) à travers laquelle une fiche électrique d'un chargeur dudit appareil électrique est apte à passer de façon à maintenir ledit dispositif support (1) sur une prise électrique,
**caractérisé en ce qu'il** comprend des premier et deuxième moyens d'assemblage réversible qui définissent deux axes perpendiculaires d'assemblage (116, 117) du bras de maintien (12) sur ledit réceptacle (11).

2. Dispositif support (1) selon la revendication 1, **caractérisé en ce qu'il** comprend des troisièmes moyens d'assemblage réversible qui définissent un troisième axe d'assemblage (118) du bras de maintien (12) sur ledit réceptacle (11).

3. Dispositif support (1) selon la revendication 1 ou 2, **caractérisé en ce que** chacun desdits moyens d'assemblage réversible est configuré de façon à ce que ledit bras de maintien (12) est monté mobile en rotation sur ledit réceptacle (11).

4. Dispositif support (1) selon l'une des revendications 1 à 3, **caractérisé en ce que** chacun desdits moyens d'assemblage réversible se présente sous la forme de moyens de clipsage.

5. Dispositif support (1) selon la revendication 4, **caractérisé en ce que** chacun desdits moyens de clipsage comprend au moins deux griffes portées par ledit réceptacle (11) et aptes à coopérer avec au moins un axe de clipsage (121) dudit bras de maintien (12).

6. Dispositif support (1) selon l'une des revendications 2 à 5, **caractérisé en ce que** lesdits troisièmes moyens d'assemblage réversible (118) comprennent des moyens de blocage en rotation (118c) du bras de maintien (12) par rapport audit réceptacle (11).

7. Dispositif support (1) selon l'une des revendications 1 à 6, **caractérisé en ce que** ladite ouverture (122) est de forme carrée.

8. Dispositif support (1) selon l'une des revendications 1 à 7, **caractérisé en ce que** ledit réceptacle (11) porte au moins une patte de stabilisation (119) dudit dispositif support (1) sur une surface plane.

9. Dispositif support (1) selon l'une des revendications 1 à 8, **caractérisé en ce que** ledit réceptacle (11) comprend une façade avant (111) solidarisée à une plaque arrière (112) de sorte à définir un espace de réception dudit appareil électrique.

10. Dispositif support (1) selon la revendication 9, **caractérisé en ce que** la façade avant (111) est solidarisée à la plaque arrière (112) par des moyens de liaison (114) qui s'étendent sur une zone réduite du bord dudit réceptacle (11).

11. Dispositif support (1) selon la revendication 10, **caractérisé en ce que** lesdits moyens de liaison (114) sont ajustables de façon à pouvoir régler l'écartement entre ladite façade avant (111) et la plaque arrière (112).

12. Dispositif support (1) selon l'une des revendications 9 à 11, **caractérisé en ce que** ladite façade avant (111) est au moins en partie transparente.

13. Dispositif support (1) selon l'une des revendications 1 à 12, **caractérisé en ce qu'**au moins un bord intérieur de ladite ouverture (122) comprend au moins un bossage (125).

14. Dispositif support (1) selon l'une des revendications 1 à 13, **caractérisé en ce que** ledit bras de maintien (12) comprend sur au moins une de ses faces une surépaisseur ou un bourrelet (123) autour de l'ouverture (122).

## Patentansprüche

1. Halterungsvorrichtung (1) für wenigstens ein wiederaufladbares elektrisches Gerät, die wenigstens eine Aufnahme (11) des Geräts und einen Haltearm (12), der abnehmbar an der Aufnahme befestigt ist, aufweist, wobei der Haltearm (12) wenigstens eine Öffnung (122) aufweist, durch welche ein elektrischer Stecker eines Ladegeräts des elektrischen Geräts hindurchführbar ist, um die Halterungsvorrichtung (1) auf einer elektrischen Steckdose zu halten,
**dadurch gekennzeichnet, dass** sie erste und zweite reversible Befestigungsmittel aufweist, die zwei senkrechte Befestigungsachsen (116, 117) des Haltearmes (12) auf der Aufnahme (11) definieren.

2. Halterungsvorrichtung (1) nach Anspruch 1, **dadurch gekennzeichnet, dass** sie dritte reversible Befestigungsmittel aufweist, die eine dritte Befestigungsachse (118) des Haltearms (12) auf der Aufnahme (11) definieren.

3. Halterungsvorrichtung (1) nach Anspruch 1 oder 2, **dadurch gekennzeichnet, dass** jedes der reversiblen Befestigungsmittel derart konfiguriert ist, dass der Haltearm (12) rotierbar auf der Aufnahme (11) montiert ist.

4. Halterungsvorrichtung (1) nach einem der Ansprüche 1 bis 3, **dadurch gekennzeichnet, dass** jedes der reversiblen Befestigungsmittel in der Form von Einrastmitteln vorliegt.

5. Halterungsvorrichtung (1) nach Anspruch 4, **dadurch gekennzeichnet, dass** jedes der Einrastmittel wenigstens zwei Greifer aufweist, die von der Aufnahme (11) getragen werden und geeignet sind, mit wenigstens einer Einrastachse (121) des Haltearms (12) zusammenzuwirken.

6. Halterungsvorrichtung (1) nach einem der Ansprüche 2 bis 5, **dadurch gekennzeichnet, dass** die dritten reversiblen Befestigungsmittel (118) Rotationsblockierungsmittel (118c) des Haltearms (12) relativ zu der Aufnahme (11) aufweisen.

7. Halterungsvorrichtung (1) nach einem der Ansprüche 1 bis 6, **dadurch gekennzeichnet, dass** die Öffnung (122) quadratisch ist.

8. Halterungsvorrichtung (1) nach einem der Ansprüche 1 bis 7, **dadurch gekennzeichnet, dass** die Aufnahme (11) wenigstens einen Fuß zur Stabilisierung (119) der Halterungsvorrichtung (1) auf einer ebenen Fläche trägt.

9. Halterungsvorrichtung (1) nach einem der Ansprüche 1 bis 8, **dadurch gekennzeichnet, dass** die Aufnahme (11) eine fest an einer Rückplatte (112) angebrachte Vorderseite (111) aufweist, so dass ein Aufnahmeraum des elektrischen Geräts definiert wird.

10. Halterungsvorrichtung (1) nach Anspruch 9, **dadurch gekennzeichnet, dass** die Vorderseite (111) durch Verbindungsmittel (114), die sich über einen reduzierten Bereich des Randes der Aufnahme (11) erstrecken, fest an der Rückplatte (112) angebracht ist.

11. Halterungsvorrichtung (1) nach Anspruch 10, **dadurch gekennzeichnet, dass** die Verbindungsmittel (114) einstellbar sind, um den Abstand zwischen der Vorderseite (111) und der Rückplatte (112) regeln zu können.

12. Halterungsvorrichtung (1) nach einem der Ansprüche 9 bis 11, **dadurch gekennzeichnet, dass** die Vorderseite (111) wenigstens zum Teil transparent ist.

13. Halterungsvorrichtung (1) nach einem der Ansprüche 1 bis 12, **dadurch gekennzeichnet, dass** wenigstens ein innerer Rand der Öffnung (122) wenigstens einen Nocken (125) aufweist.

14. Halterungsvorrichtung (1) nach einem der Ansprüche 1 bis 13, **dadurch gekennzeichnet, dass** der Haltearm (12) wenigstens auf einer seiner Flächen eine Verdickung oder einen Wulst (123) um die Öffnung (122) aufweist.

## Claims

1. Support device (1) for a rechargeable electrical apparatus comprising at least one receptacle (11) for said apparatus and a holding arm (12) removably connected to said receptacle, said holding arm (12) comprising at least one opening (122) through which an electrical plug of a charger of said apparatus is able to pass so as to hold said support device (1) on an electrical socket,
**characterised in that** it comprises first and second reversible connection means which define two perpendicular connection axes (116, 117) for connecting the holding arm (12) to said receptacle (11).

2. Support device (1) according to Claim 1, **characterised in that** it comprises third reversible connection means which define a third connection axis (118) for connecting the holding arm (12) to said receptacle (11).

3. Support device (1) according to Claim 1 or 2, **characterised in that** each of said reversible connection means is configured so that said holding arm (12) is mounted rotationally movably on said receptacle (11).

4. Support device (1) according to one of Claims 1 to 3, **characterised in that** each of said reversible connection means is in the form of clipping means.

5. Support device (1) according to Claim 4, **characterised in that** each of said clipping means comprises at least two claws carried by said receptacle (11) and capable of cooperating with at least one clipping shaft (121) of said holding arm (12).

6. Support device (1) according to one of Claims 2 to 5, **characterised in that** said third reversible connection means (118) comprise rotational blocking means (118c) for rotationally blocking the holding arm (12) relative to said receptacle (11).

7. Support device (1) according to one of Claims 1 to 6, **characterised in that** said opening (122) is of square shape.

8. Support device (1) according to one of Claims 1 to 7, **characterised in that** said receptacle (11) carries at least one stabilising foot (119) for stabilising said support device (1) on a plane surface.

9. Support device (1) according to one of Claims 1 to 8, **characterised in that** said receptacle (11) comprises a front facade (111) secured to a rear plate (112) so as to define a space for receiving said electrical apparatus.

10. Support device (1) according to Claim 9, **characterised in that** the front facade (111) is secured to the rear plate (112) by joining means (114) which extend over a small area of the edge of said receptacle (11).

11. Support device (1) according to Claim 10, **characterised in that** said joining means (114) are adjustable so as to be able to adjust the spacing between said front facade (111) and the rear plate (112).

12. Support device (1) according to one of Claims 9 to 11, **characterised in that** said front façade (111) is at least partly transparent.

13. Support device (1) according to one of Claims 1 to 12, **characterised in that** at least one inner border of said opening (122) comprises at least one boss (125).

14. Support device (1) according to one of Claims 1 to 13, **characterised in that** said holding arm (12) comprises on at least one of its faces an extra thickness or a flange (123) around the opening (122).
